(19) Europäisches Patentamt / European Patent Office / Office européen des brevets

(11) **EP 3 698 520 B1**

(12) **EUROPEAN PATENT SPECIFICATION**

(45) Date of publication and mention
of the grant of the patent:
**20.03.2024 Bulletin 2024/12**

(21) Application number: **18869311.3**

(22) Date of filing: **15.10.2018**

(51) International Patent Classification (IPC):
*H04L 41/14* (2022.01)     *H04L 41/40* (2022.01)
*H04L 49/25* (2022.01)     *H04L 49/253* (2022.01)
*H04L 45/24* (2022.01)

(52) Cooperative Patent Classification (CPC):
**H04L 41/145; G06F 13/00; H04L 12/00;
H04L 41/40; H04L 49/25; H04L 49/253;** H04L 45/24

(86) International application number:
**PCT/IL2018/051106**

(87) International publication number:
**WO 2019/077602 (25.04.2019 Gazette 2019/17)**

(54) **A COMMUNICATION ROUTING SYSTEM**

SYSTEM FÜR KOMMUNIKATIONSROUTING

SYSTÈME D'ACHEMINEMENT DE COMMUNICATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2017 US 201762573190 P**

(43) Date of publication of application:
**26.08.2020 Bulletin 2020/35**

(73) Proprietor: **Drivenets Ltd.
4366411 Raanana (IL)**

(72) Inventors:
• **SANDLER, Evgeny
4642720 Herzliya (IL)**
• **ZILBERMAN, Alexander
3838210 Hadera (IL)**
• **KRAYDEN, Amir
Even Yehuda (IL)**
• **ZOLKOVER, Gal
3457406 Haifa (IL)**

(74) Representative: **Grünecker Patent- und
Rechtsanwälte
PartG mbB
Leopoldstraße 4
80802 München (DE)**

(56) References cited:
**EP-A2- 2 034 410        EP-A2- 2 034 410
CN-A- 101 242 371        US-A1- 2005 089 054
US-A1- 2005 169 281      US-A1- 2007 263 618
US-A1- 2016 218 917**

## Description

### TECHNICAL FIELD

The present disclosure generally relates to the field of communication systems. More particularly, the present disclosure relates to systems implementing software-defined networking.

### BACKGROUND

With the ever-growing capacity of data traffic being conveyed in nowadays computer networks, the demand for big routers that can adequately forward data packets between such computer networks, also grows. Routers carry out the traffic directing functions typically by forwarding each data packet from one router to another router along the networks, until the data packet reaches its final destination node.

A router is typically connected to two or more data lines from different networks. When a data packet arrives along one of these lines, the router reads the network address information embedded within the data packet, in order to determine its ultimate destination. Then, using information that is comprised in its routing table, or by following a pre-defined routing policy, the router forwards the data packet towards the next network node.

Also, a router has typically two stages of operation that are referred to as planes, namely, a control plane and a forwarding plane. A router maintains a routing table that lists which route should be used to forward a data packet towards a certain destination, and through which physical interface connection to do so. This is achieved by using internal preconfigured static routes, or by learning routes while implementing a dynamic routing protocol. Static and dynamic routes are stored in the router's Routing Information Base (RIB). The control-plane logic then strips non-essential directives from the RIB and builds a Forwarding Information Base (FIB) for use by the forwarding-plane.

The forwarding plane is used to enable the router to forward data packets between incoming and outgoing interface connections. The forwarding plane enables to convey the data packets to the correct network by using information embedded in the header of the data packet and by using data recorded in the routing table control plane.

Different sizes of routers may be found. The most powerful routers are usually found in ISPs, academic and research facilities. In addition, large businesses may also use powerful routers to cope with ever-increasing demands of Intranet data traffic.

Typically, a router comprises a chassis which is a rigid sheet-metal structure that houses all of the router hardware components. Traditionally, routers have a line card chassis for holding the line cards, a fabric switching unit and a routing processor that manages the line cards and the traffic that is being conveyed between the line cards. A line card consists of a physical interface card and a modular services card. The physical connectivity may be obtained by using optical fibers or twisted pair cables, extending between the different line cards. The routing decisions are made by the routing processor and the switching fabric takes care of the routing of the data packets based on the input received from the routing processor.

EP 2 034 410 A2 discloses a system having a cluster of system components interconnected by a cluster interconnect fabric, the system components include out-of-band management network interfaces to an out-of-band management network. The system is configured to use the cluster interconnect fabric and the out-of-band management network interfaces to determine the overall connectivity and status of the cluster.

In addition, during last years, there is a growing usage of white boxes. A white box is a standalone commodity, being an open or an industry-standard compliant hardware for switching and/or routing within the forwarding plane. White boxes provide users with fundamental hardware elements of a communication network. However, when a large number of such white boxes are being used, there is a problem of managing their operation, as prior art solutions require the use of powerful routers in order to perform this task, and when such a large number of white boxes are used together with these powerful routers, the whole operation becomes quite a cumbersome operation.

The present invention seeks to provide a solution to this problem.

### SUMMARY

The invention is defined in the appended claims. Examples, aspects and embodiments not necessarily falling under the scope of the claims are provided in the application to better understand the invention.

It is an object of the present disclosure to provide a system and a method for obtaining a functionality of a powerful router without utilizing a physical chassis having a back plan being a part thereof, for managing traffic conveyed between line cards associated with the same routing entity.

It is another object of the present disclosure to provide a system and a method for obtaining a functionality of a powerful router, while utilizing a plurality of standalone white boxes instead of a plurality of line cards that would have otherwise been used as part of a powerful router whose functionality is achieved by implementing the novel system provided.

Other objects of the present disclosure will become apparent from the following description.

According to a first embodiment of the present disclosure, there is provided a distributed routing system for use in a communication network, according to claim 1.

The term "white box" as used herein throughout the specification and claims, is used to denote a commodity, being an open or industry-standard compliant hardware, such as a personal computer or server not having a well-known brand name. For instance, this term applies to systems assembled by small system integrators and to home-built computer systems assembled by end users from parts purchased separately at retail or from an original design manufacturer (ODM). They are often used as switches and/or routers within the forwarding plane. White boxes provide users with the foundational hardware elements of a network.

The term "processor" as used herein throughout the specification and claims, is used to denote a device or a part thereof that is provided with processing capabilities, for example, a server or any equivalent processing device comprised for example in the x86 part of a respective white box.

The term "switching fabric" as used herein throughout the specification and claims, is used to denote fabric switching units (individual boxes), the integrated circuits that they contain, and the programming that allows switching paths to be controlled.

The term "clos network" as used herein throughout the specification and claims, is used to denote a multistage circuit switching telecommunication network which represents a theoretical idealization of practical multi-stage telephone switching systems. Clos networks are required when the physical circuit switching needs to exceed the capacity of the largest feasible single crossbar switch. The key advantage of Clos networks is that the number of cross-points (which make up each crossbar switch) required, can be by far fewer than would be required had the entire switching system been implemented with one large crossbar switch. Clos networks have three stages: the ingress stage, a middle stage, and the egress stage. Each stage is made up of a number of crossbar switches. Each packet entering an ingress crossbar switch can be routed through any of the available middle stage crossbar switches, to the relevant egress crossbar switch. A middle stage crossbar is available for any particular new packet, if both the link connecting the ingress switch to the middle stage switch, and the link connecting the middle stage switch to the egress switch, are both free.

According to another embodiment, the at least one processor is configured to serve as the focal point for all in-band control and management traffic.

In accordance with another embodiment, the at least one processor is configured to function as an SDN controller configured to program routing tables for a plurality of line cards and a plurality of fabric switching units.

By yet another embodiment, the queuing policy implemented within the distributed routing system is a member selected from a group that consists of: a) End-to-End Virtual output queueing (VOQ); and b) Combined Input Output Queuing (CIOQ).

According to still another embodiment, each line card is capable of being connected to any one of the other line cards through every one of the fabric switching units.

In accordance with another embodiment, the routing policy for conveying traffic from an ingress line card to an egress line card via a fabric switching unit, comprises implementing Equal Cost MultiPath (ECMP) policy (or any other applicable load balancing mechanism).

By still another embodiment, each line card and each fabric switching unit has its own intra-chassis loopback interface address, and wherein each line card and each fabric switching unit is configured to establish interior gateway protocol (hereinafter: "IGP") adjacencies with other line cards and fabric switching units comprise in the distributed routing system and to advertise its intra-chassis loopback interface address thereto.

## BRIEF DESCRIPTION OF THE DRAWINGS

The accompanying drawings, which are incorporated herein and constitute a part of this specification, illustrate several embodiments of the disclosure and, together with the description, serve to explain the principles of the embodiments disclosed herein.

FIG. 1 illustrates a schematic view of a routing system in accordance with an embodiment of the present disclosure;

FIG. 2 illustrates a line card where two types of potential VOQs are demonstrated;

FIG. 3 demonstrates a virtual model of a routing pipeline composed of a 2-stages forwarding decision according to an embodiment of the present disclosure;

FIG. 4 demonstrates an example of the topology of a network construed according to an embodiment of the present disclosure;

FIG. 5 illustrates an embodiment of applying control protocols in a virtual chassis routing system;

FIG. 6 demonstrates an example of data flow in the virtual chassis routing system;

FIG. 7 demonstrates an example of the control plane flow of a virtual chassis routing system;

**FIG. 8** shows the data plane flow of the virtual chassis routing system depicted in FIG. 7; and

**FIGs 9 - 12** exemplify various implementations of the virtual chassis of a routing system construed in accordance with an embodiment of the disclosure.

## DESCRIPTION OF EXEMPLARY EMBODIMENTS

Some of the specific details and values in the following detailed description refer to certain examples of the disclosure. However, this description is provided only by way of example and is not intended to limit the scope of the invention in any way. As will be appreciated by those skilled in the art, the claimed method and device may be implemented by using other methods that are known in the art *per se*. In addition, the described embodiments comprise different steps, not all of which are required in all embodiments of the invention. The scope of the invention can be summarized by referring to the appended claims.

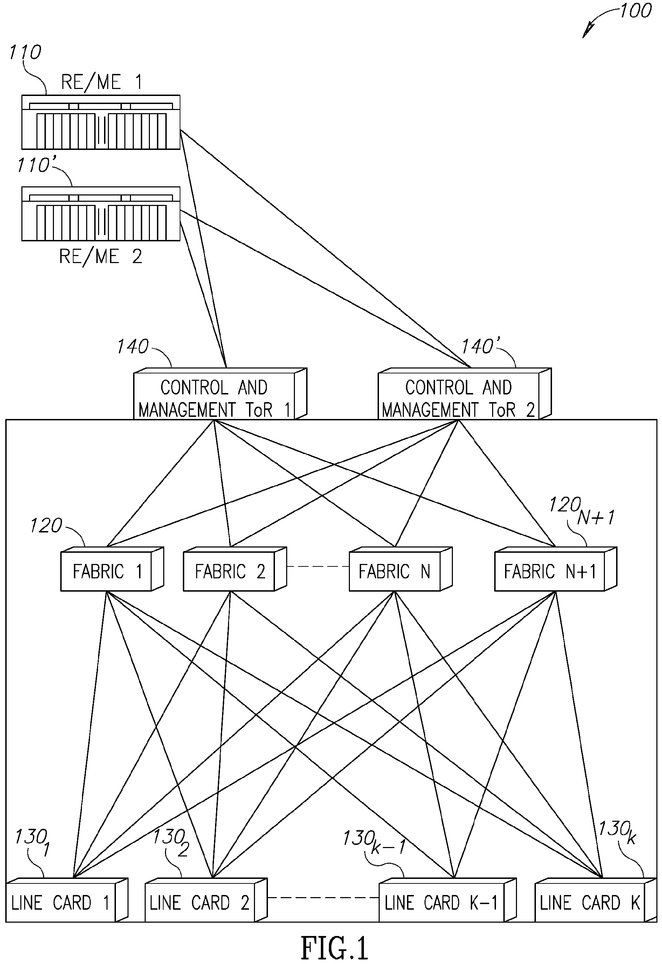

FIG. 1 illustrates a schematic view of a routing system 100 which is a virtual chassis that combines a plurality of white boxes, construed in accordance with an embodiment of the present invention. In the following description, various aspects that relate to the operation of such a system will be described and exemplified.

The routing system depicted in this FIG. comprises a couple of servers (110 and 110') which function as Routing Engines ("RE") / Management Engines ("ME") that are configured to be used as a focal point for all inband control and management of traffic. Each of these two engines are also operative as an SDN controller adapted to configure the line cards ($130_1$ to $130_K$) and the routing tables of fabric switching units ($120_1$ to $120_{N+1}$). In addition, they may also be used to maintain the router structure and coherency by health checking and monitoring all other elements associated therewith.

In addition, routing system 100 further comprises two control and management ToR (Top of Rack) switches (140 and 140'), each used as an out-of-band ("OOB") fabric switching unit that is capable of connecting the switching elements of the routing system (e.g. the line cards and fabric switching units) to the RE/ME servers for management, provisioning, forwarding information base ("FIB") programming and control of traffic that has originated from the routing system or from one or more neighboring network elements.

Each of the fabric switching units ($120_1$ to $120_{N+1}$) comprised in routing system 100 is configured to be used as a temporary junction that enables communications to be carried out between the various line cards, which in turn is needed for packet forwarding purposes. On the other hand, each of the fabric switching units ($120_1$ to $120_{N+1}$) is also configured in such a set up as a temporary junction that enables communications to be carried out between the RE/ME (110 and 110'), allowing line cards' management, provisioning, FIB programming and traffic control.

Preferably, the fabric switching units are connected to line cards in a Clos topology, which enables the following:

(i) Connection of every fabric switching unit to every line card;
(ii) Avoiding direct interconnection between the fabric switching units themselves;
(iii) Avoiding direct interconnection between the line cards themselves; and
(iv) Establishing a temporary connection between every line card i comprised in routing system 100 with each of the other line cards in that routing system via each fabric switching unit *j*.

Each of the line cards ($130_1$ to $130_{K+1}$), which may be regarded also as a Forwarding Engine (FE), that are included in routing system 100 is preferably operative to enable the following functionalities:

Switching traffic to enable forwarding of data packets;
Connecting to customers links (via UNIs, User Network Interfaces) or to neighboring network elements (via NNI, Network to Network Interfaces); and
Implementing decisions made by RE/ME 110/110' for forwarding data packets between ingress ports (e.g. local ports) and egress ports (which may be either local ports or remote ports connected through the fabric layer).

### Queuing Policies

In the following discussion, Ingress/Input queuing scheme that suffers from Head of Line Blocking (hereinafter "HOLE") will not be addressed, nor will Egress/Output queuing schemes that requires speed-up by factor of N (where N is a number of ingress interfaces), be addressed.

In the next queuing discussion, reference will be made only to the following queuing schemes:

• End-to-End Virtual output queueing (hereinafter: "VOQ");
• Combined Input Output Queuing (hereinafter: "CIOQ") - wherein a VOQ policy is implemented at each fabric switching unit egress port and an egress congestion/collision buffer at each egress port.

End-to-End VOQ

In a system implementing an End-to-End VOQ policy, there is a unique queuing scheme on a per egress sub-interface and on a per traffic class basis. A data packet is buffered in a queue subsequent to a switching / routing decision being made with respect to that packet prior to its transmission to the egress interface through the switching fabric. The queue buffer is logically located at the ingress part of the system but represents an egress interface. Such a scheme effectively prevents occurrence of HOLB that degrades the switching / routing performance and does not require an N x speed-up at the egress side.

End-to-End VOQs compliant systems comprise a plurality of switching Network Processing Units (hereinafter: "NPUs") / Packet Processors (hereinafter: "PPs") as well as fabric switching elements that may reside on the same chip or on different ones.

All the plurality of these NPUs, are linked together through the fabric switching elements of a single Traffic Management Domain (hereinafter: "TMD"), so that when a packet entering the system through one of the NPUs is scheduled for transmission based on global / TMD wide constraints, that scheduling takes into consideration the status of the egress interface as well as that of the fabric.

Within such a system, scheduling algorithms that are typically implemented, are token based algorithms that are as accurate, deterministic, fair and efficient, as possible. Mathematically, this characterization is essentially equal to trying to approximate the best bi-partite graph that can connect all ingress and egress interfaces through the fabric lines.

In order to comply with these requirements for accuracy, determinism, fairness and efficiency, the scheduling may preferably be carried out by:

1. Moving from an asynchronous domain (packets) to a synchronous domain (cells or micro-cells (ucells));
2. Operating at a mode of small pcells, where the transmitted data packets are only fragments of the original data packet, in order to avoid clogging the fabric with elephant flows / frames;
3. Speeding up the fabric operation (e.g. by 1.2 to 2 times) to enable the fabric to handle a massive switching bandwidth required, all without making use of buffers.

Combined Input Output Queuing (CIOQ)

One method proposed to reduce HOLB is to increase the "speedup" of a switch. A switch with a speedup of X can remove up to X packets from each input and deliver up to X packets to each output within a time slot, where a time slot is the period of time that extends between packet arrivals at input ports. Hence, an output queued switch has a speedup of N while an input queued switch has a speedup of one. For values of between 1 and N packets need to be buffered at the inputs before switching as well as at the outputs after switching. This architecture is referred to as a typical combined input and output queued (CIOQ) switch architecture.

However, the solution provided by the present invention differs from the typical system implementing a straightforward CIOQ architecture, by at least the following features:

1. According to the present invention, a VOQ buffering scheme is provided for the fabric interfaces (physical ports / LAG bundles);
2. According to the present invention, a VOQ buffering scheme is provided for line card egress interfaces (physical ports / LAG bundles / sub-interfaces); and
3. According to the present invention, a VOQ buffering scheme is provided within the fabric switching units themselves.

As discussed above, FIG. 1 demonstrates the inter connectivity between fabric switching units ($120_1$ to $120_{N+1}$) and line cards ($130_1$ to $130_{K+1}$), that are interconnected in a CLOS network type of configuration, built from a recurrent building blocks. For example, a mini virtual chassis based on merchant silicon NPU with or without deep buffers devices with FFF (Fixed Form Factor) based switches, such as a CLOS configuration comprising 8 X merchant silicon NPU devices and 4 X Fabric Elements. A unique characteristic of the routing system discussed herein in connection with FIG. 1, is that each building block serves in fact as an End-to-End VOQ system on its own.

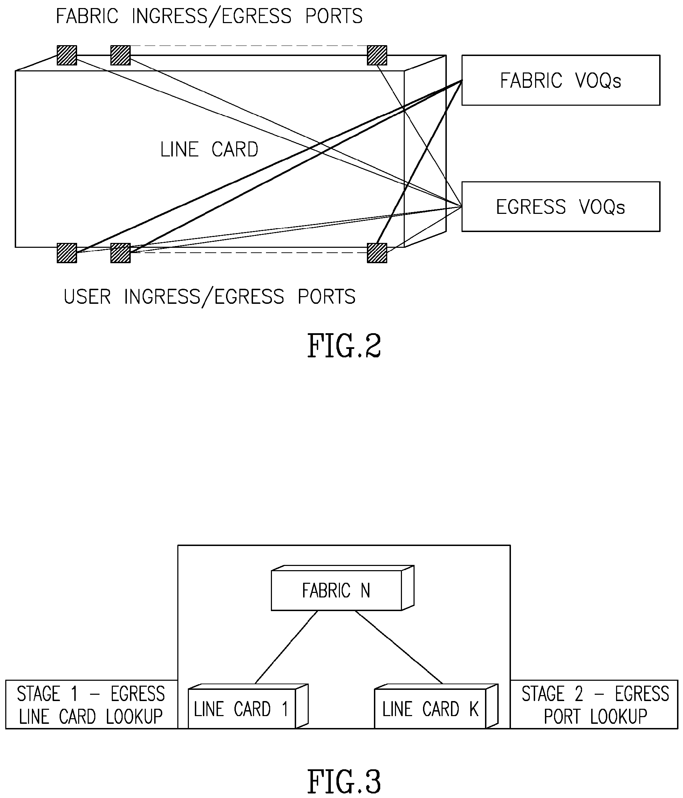

FIG. 2 illustrates a line card where two types of potential VOQs are demonstrated, one is an Egress VOQ and the other is a fabric VOQ. The following Table 1, outlines some of the differences that exist between these two types of VOQs.

**Table 1**

| VOQ Type | Queued Interfaces | Description of Traffic Flows |
|---|---|---|
| Egress VOQs | Physical ports / LAG bundles/ sub-interfaces associated with the line card's egress interfaces | From ingress ports of the line card to egress ports thereof (local routing of traffic) Fabric incoming traffic (transmitted from other line cards or from RE/ME) to be conveyed to an egress port of the current line card |
| Fabric VOQs | Physical ports / LAG bundles at the line card's fabric interfaces | From ingress ports of the line card to an egress port of another line card through a specific fabric port |

Reference is now being made to FIG. 3 that demonstrates a virtual model of a routing pipeline composed of a 2-stages forwarding decision.

At the first stage (at the ingress line card), the packet headers are being used as inputs for a lookup table associated with the egress line card from which the packet would be conveyed towards its next hope along a path extending towards the packet's destination. This stage is essentially equivalent to selecting a path through the fabric towards the egress line card.

At the second stage of the virtual model (at the egress line card), the packet headers are being used as inputs for a lookup table associated with the egress interface connected to the next hop towards which the packet should now be conveyed.

As will be appreciated by those skilled in the art, the above described two stages of the model may be merged into a single stage, in case that both the ingress and egress interfaces reside at the same line card switch.

## Fabric Paths and Scheduling

For the present discussion, as each line card of the routing system may communicate with any other line card of the routing system via one of the various fabric switching units that belong to that routing system, no scheduling algorithm *per se* is applied to manipulate the operation of the various fabric switching units. Yet, the routing strategy implemented according to one embodiment of the present disclosure is a load balancing mechanism such as an Equal Cost MultiPath (hereinafter: "ECMP") or any other applicable mechanism, which handles the routing of traffic from the ingress line card to the egress line card via the fabrics.

This routing strategy, determines where a next-hop packet should be forwarded to a single destination, and the forwarding may take place over multiple "best paths" which tie for top place in routing metric calculations.

ECMP is used according to this example for the following purposes:

1. To spread (or at least try spreading) the traffic between various line cards in order to average the load over the fabrics; and
2. To maintain flow coherency and packet order by choosing the same path therefor.

Let us assume now that the routing system exemplified in FIG. 1 comprises K line cards and N fabric switching units.

For each line card, the following relationship may be applied:

$$\#FabricsToLineCardsPaths = (K-1) * N$$

bearing in mind that when the ingress and egress ports reside at the same line card switch, no path over the fabric would be taken.

## Intra-Chassis Connectivity

Intra-Chassis connectivity meets according to the present example the following characteristics:

- Each line card is connected to the fabric via a bundle of interfaces.

  ○ The bundle of interfaces is constructed from **X** fabric-facing interfaces.
  ○ **X** may dynamically be changed to accommodate current needs, as long as the following relationships are valid

$$X*(N+1) \ <= \ p/2 \ and \ X*K \ <= \ t,$$

where

- **N + 1** is the number of white-boxes holding fabric switching units;
- **K** is the number of white-boxes holding line cards;
- **p** is the number of ports in a white box holding a line card; and
- **t** is the number of ports in a white box holding a fabric switching unit.

- Each line card has **X\*N** "network facing" interfaces, thereby assuring **N+1** fabric protection schemes;
- The fabric switching unit is a speed-up fabric:

  ○ Each line card is connected to an additional fabric switching unit, whose number is N+2;
  ○ An additional fabric-facing bundle is used, wherein this bundle is constructed from "over-subscribed" interfaces;

    ■ An additional fabric-facing bundle is used in order to achieve intra-chassis speed-up functionality, as will be further elaborated hereinbelow.

## Intra-Chassis Routing Scheme

Tunnels are created between devices or systems that ride on top of the physical network located underneath. This means that the overlay network can function irrespective of the state of the underlay network, provided that a path exists between the two hosts. However, it also means that the overlay obscures the details of the physical network.

An interior gateway protocol (hereinafter: "IGP") is a type of protocol used for exchanging routing information between gateways (commonly routers) within an autonomous system. This routing information may then be used to route network-layer protocols such as IP.

Examples of protocols that may be used for IGP include: Open Shortest Path First ("OSPF"), Routing Information Protocol (RIP), Intermediate System to Intermediate System ("IS-IS") and Enhanced Interior Gateway Routing Protocol ("EIGRP").

Following are features that characterize an underlay IGP according to an embodiment of the present disclosure:

(i) Each line card and fabric switching unit has its own intra-chassis loopback interface address;
(ii) Each line card/ fabric switching unit establishes IGP adjacencies with other line cards and fabric switching units, and is configured to advertise its own intra-chassis loopback interface address;

  ○ Line cards send IGP Link State Advertisements (hereinafter: "LSAs") only via fabric-facing interfaces; and
  ○ Line cards do not advertise intra-chassis loopback address to the network-facing interfaces (e.g. using network IGP/ Exterior Gateway Protocol ("EGP")).

By this embodiment, the underlay Label Distribution Protocol (hereinafter: "LDP") or any other applicable protocol, is used for distributing labels within the intra-chassis network and for constructing forward error corrections ("FECs") for the intra-chassis loopback addresses. FEC for each intra-chassis loopback is constructed from multiple paths, preferably, N+2 paths. In addition, the fabrics may act as a Penultimate Hop Popping (hereinafter: "PHP") for the egress line cards. A PHP is a function performed by certain routers in an MPLS enabled network, and refers to the process whereby the outermost label of an MPLS tagged packet is removed by a Label Switch Router ("LSR") before the packet is forwarded to an adjacent label Edge Router (LER).

## Intra-Chassis Fault Detection and Protection Mechanisms

Bidirectional Forwarding Detection (hereinafter: "BFD") or any other applicable protocol is a network protocol used to detect faults that occur between two forwarding engines connected by a link. It provides low-overhead detection of faults even on physical media that does not support failure detection of any kind, such as Ethernet, virtual circuits, tunnels and MPLS Label Switched Paths.

BFD may be used to establish a session between two endpoints over a particular link. If more than one link exists between two systems, multiple BFD sessions may be established to monitor each one of them. The session is established with a three-way handshake, and is torn down the same way.

BDF is used according to an embodiment of the present invention in order to detect faults that occur along a link that extends between a couple of line cards. Preferably, the BFD protocol is implement by observing the following:

- Multi-hop IP-BFD is maintained along a link that extends between line cards; and
- IP-BFD session is established between fabric-facing bundles on each line card, while each fabric-facing bundle has its own unique IP address.

An example of a protection mechanism that may be implemented in conjunction with the detection mechanism BDF discussed above is Fast ReRoute ("FRR"). FRR is used to provide fast traffic recovery upon link or router failures. Typically, upon any single link or node failure, it could be able to recover impacted traffic flows in the level of up to 50 ms. Preferably, the protection mechanism for this embodiment of the disclosure is achieved by implementing a combination of FRR with the Equal Cost MultiPath (ECMP) mechanism.

**Egress Routing over Intra-Chassis Routing Scheme**

Egress IGP/EGP packets, wherein EGP is Exterior Gateway Protocol for exchanging routing information between two neighbor gateway hosts (each with its own router) in a network of autonomous systems, are trapped by line cards while being conveyed towards the routing engine (RE).

The RE may then preferably construct a routing information base ("RIB"), which is a data table stored thereat that lists the routes to particular network destinations. It contains information about the topology of the network immediately around it. Such a RIB may be constructed based on the following information: prefix associated with the packet header, Next hop for the packet, and output interface (hereinafter: "OIF").

Next, the RE may update the egress Forward Information Base ("FIB") on each line card as follows:

(i) For each prefix with next OIF at the egress of line card number *i*, RE sets an intra-chassis loopback of line card i as a next hop for a given prefix; and

(ii) At the line card i itself, the 'next-hop is set according to the next-hop value specified in the RIB.

**IP routing example:**

Let us now consider the following example that demonstrates one possible routing implementation in a system construed according to the solution provided by the present invention.

Routing at the ingress line card:

- From the packet prefix, a loopback address of a respective egress line card is retrieved, using recursive FEC routing with respect to the egress line card (via the intra-chassis network);

- The packet is then encapsulated using intra-chassis MPLS label (or any other applicable means of encapsulation) and is forwarded towards one of the fabric switching units. Optionally, the decision on the specific fabric switching unit that should be used from among the available fabric switching units is taken by applying the ECMP mechanism.

Fabric routing:

- The selected fabric switching unit then forwards the packet in accordance with the Label Switched Path ("LSP"); and

- The fabric switching unit, acting as a PHP, removes the MPLS label before forwarding the packet toward the respective egress line card.

Routing at egress line card:

- The egress line card receives the packet forwarded thereto by the fabric switching unit, and by applying the Longest Prefix Match ("LPM") from the LPM look-up table, returns next output Interface (OIF) for the packet of that specific prefix;

- The packet is being conveying via the network-facing output interface.

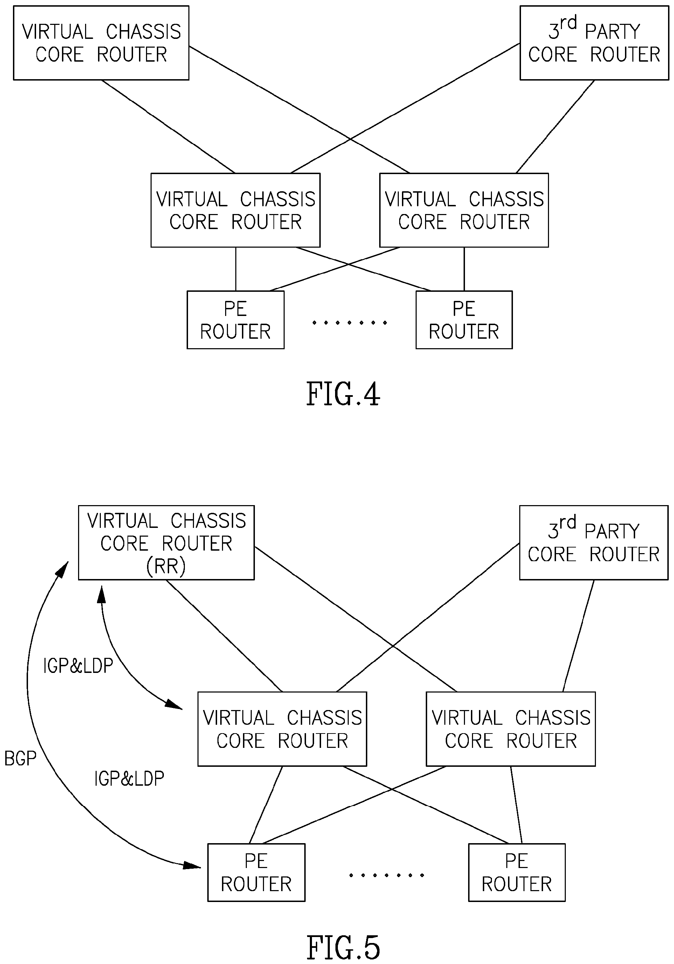

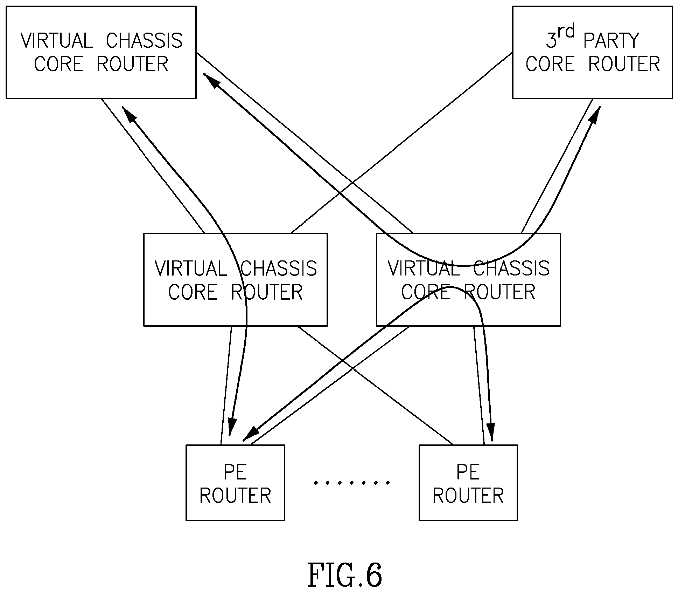

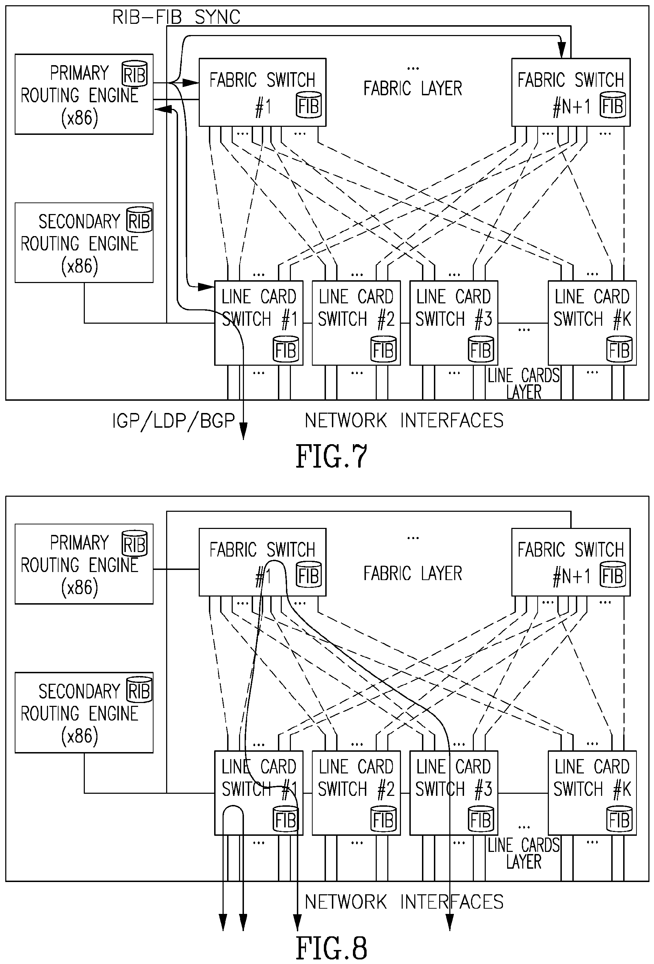

The basic principles of the white boxes virtual chassis depicted in FIG. 1 for routing traffic, have been discussed above. For better understanding these principles, FIGs. 4 to 8, illustrate certain aspects that relate to the topology of such a system as well as to operational principles thereof. Fig. 4 demonstrates an example of a network topology, FIG. 5 illustrates an embodiment of applying control protocols, FIG. 6 demonstrates an example of data flow in the system, FIG. 7 demonstrates the control plane flow of a virtual chassis routing system and FIG. 8 shows the data plane flow of that virtual chassis routing system.

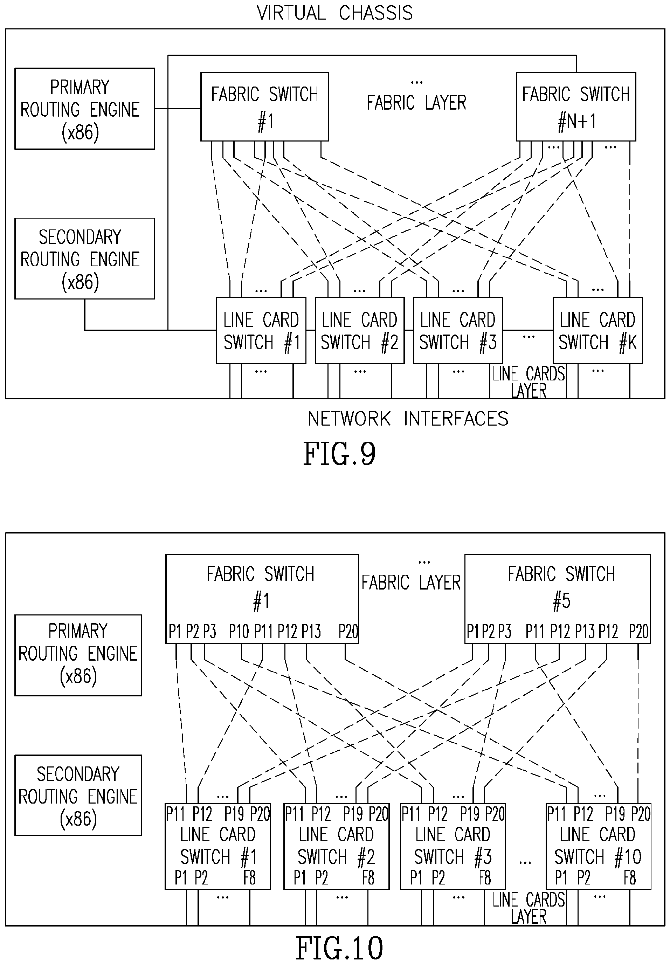

Next, let us turn to FIGs. 9 to 12 that exemplify certain implementations of the white boxes virtual chassis of the routing system.

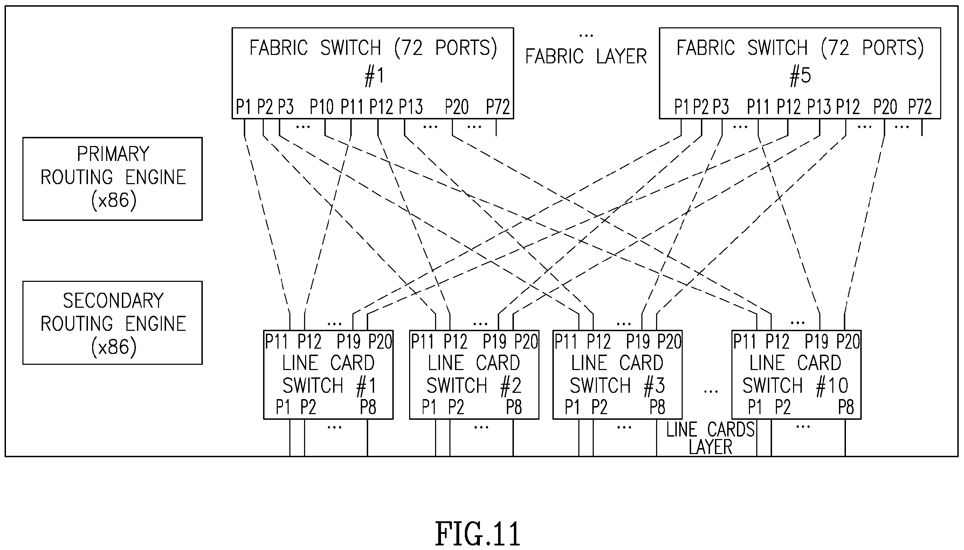

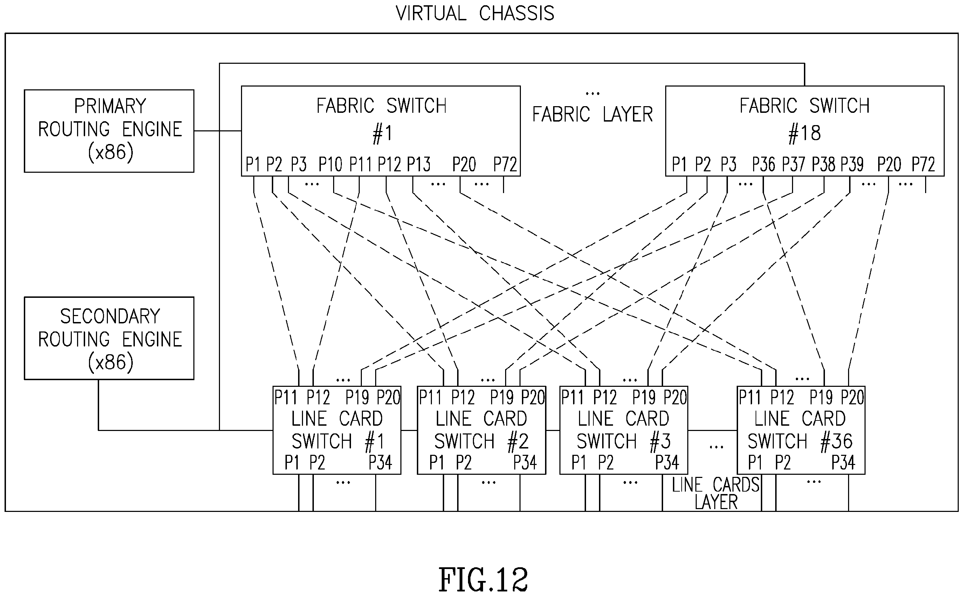

FIG. 9 exemplifies a certain virtual chassis of a routing system construed in accordance with an embodiment of the disclosure. FIG. 10 demonstrates a deployment option for such a virtual chassis which comprises five (4 + 1) fabric switching units based on 20 ports of while boxes and up to 10 line cards, based on 20 ports of white boxes. FIG. 11 illustrates a non-traffic affecting example of an upgrade option from a virtual chassis which comprises 20 white boxes ports to a virtual chassis that comprises 72 white boxes' ports. FIG. 12 illustrates another deployment option for a virtual chassis, where in this example the virtual chassis comprises eighteen + 1) fabric switching units based on 72 ports of while boxes and up to 36 line cards, based on 72 ports of white boxes.

Other embodiments of the invention will be apparent to those skilled in the art from consideration of the specification and practice of the invention disclosed herein. It is intended that the specification and examples be considered as exemplary only, with the scope of the invention being indicated by the following claims.

**Claims**

1. A distributed routing system (100) for use in a communication network, said routing system comprises:
   at least one processor (110, 110') configured as a routing engine and/or a management engine,

   at least one switch fabric controller (140, 140') configured for controlling out-of-band traffic arriving thereat, and
   a plurality of white boxes, each being a stand-alone hardware comprising at least one line card (130) or at least one fabric switching unit (120) for providing switching or routing capabilities within a forwarding plane of said distributed routing system,
   wherein said at least one switch fabric controller is configured to connect said plurality of white boxes to said at least one processor, thereby enabling said at least one processor to manage routing of traffic to/from said plurality of white boxes;
   wherein said distributed routing system comprises the routing/management engine configured to be used as a focal point for inband control and management of traffic, and operative to configure line cards associated with said white boxes and routing tables of fabric switching units of said white boxes; and
   wherein said routing system is a virtual chassis that combines the plurality of white boxes, thereby obtaining a functionality of a router by utilizing a plurality of standalone white boxes.

2. The distributed routing system (100) of claim 1, wherein said at least one processor (110, 110') is configured to serve as the focal point for all in-band control and management traffic.

3. The distributed routing system (100) of claim 1, wherein said at least processor (110, 110') is configured to function as an SDN controller configured to program routing tables for a plurality of line cards (130) and a plurality of fabric switching units (120).

4. The distributed routing system (100) of claim 1, wherein a queuing policy implemented within said distributed routing system is a member selected from a group that consists of: a) End-to-End Virtual output queueing (VOQ); and b) Combined Input Output Queuing (CIOQ).

5. The distributed routing system (100) of claim 1, wherein each line card (130) is capable of being connected to any one of the other line cards through every one of the fabric switching units (120) by implementing a load balancing mechanism.

6. The distributed routing system (100) of claim 5, wherein a routing policy for conveying traffic from an ingress line card to an egress line card via a fabric switching unit (120), comprises implementing Equal Cost MultiPath, ECMP, policy.

7. The distributed routing system (100) of claim 1, wherein each line card (130) and each fabric switching unit (120) has its own intra-chassis loopback interface address, and wherein each line card and each fabric switching unit is configured to establish IGP adjacencies with other line cards and fabric switching units comprise in said distributed routing system and to advertise its intra-chassis loopback interface address thereto.

**Patentansprüche**

1. Verteiltes Routing-System (100) zur Verwendung in einem Kommunikationsnetzwerk, wobei das Routing-System umfasst:

   wenigstens einen Prozessor (110, 110'), ausgebildet als eine Routing-Engine und/oder eine Management-Engine,
   wenigstens ein Switch-Fabric-Steuergerät (140, 140'), ausgebildet zum Steuern des dort eintreffenden Out-of-Band-Datenverkehrs, und
   eine Vielzahl von White Boxes, die jeweils eine eigenständige Hardware, umfassend wenigstens eine Line Card (130) und/oder wenigstens eine Fabric-Switching-Einheit (120) zur Bereitstellung von Schalt- und/oder Routing-Fähigkeiten innerhalb einer Weiterleitungsebene des verteilten Routing-Systems,
   wobei das wenigstens Switch-Fabric-Steuergerät zum Verbinden der Vielzahl von White Boxes mit dem wenigstens einen Prozessor ausgebildet ist, wodurch der wenigstens eine Prozessor in die Lage versetzt wird, das Routing von Datenverkehr zur / von der Vielzahl von White Boxes zu verwalten;
   wobei das verteilte Routing-System die Routing-/Management-Engine umfasst, ausgebildet zur Verwendung als zentraler Punkt für Inband-Steuerung und -Management von Datenverkehr und ausgebildet zum Konfigurieren von Line Cards, verbunden mit den White Boxes und Routing-Tabellen von Fabric-Switching-Einheiten der White Boxes; und
   wobei das Routing-System ein virtuelles Chassis ist, das die Vielzahl von White Boxes kombiniert, wodurch eine Funktionalität eines Routers durch Nutzen einer Vielzahl von eigenständigen White Boxes erreicht wird.

2. Verteiltes Routing-System (100) nach Anspruch 1, wobei der wenigstens eine Prozessor (110, 110') ausgebildet ist, als zentraler Punkt für den gesamten Inband-Steuerungs- und Management-Datenverkehr zu dienen.

3. Verteiltes Routing-System (100) nach Anspruch 1, wobei der wenigstens eine Prozessor (110, 110') ausgebildet ist, als ein SDN-Steuergerät zu dienen, ausgebildet zum Programmieren von Routing-Tabellen für eine Vielzahl von Line Cards (130) und eine Vielzahl von Fabric-Switching-Einheiten (120).

4. Verteiltes Routing-System (100) nach Anspruch 1, wobei eine im verteilten Routing-System implementierte Warteschlangenstrategie ein Element ausgewählt aus einer Gruppe ist, die besteht aus:
   a) End-to-End Virtual Output Queueing (VOQ); und b) Combined Input Output Queuing (CIOQ).

5. Verteiltes Routing-System (100) nach Anspruch 1, wobei jede Line Card (130) in der Lage ist, mit einer der anderen Line Cards durch jede der Fabric-Switching-Einheiten (120) durch Implementieren eines Lastausgleichsmechanismus verbunden zu werden.

6. Verteiltes Routing-System (100) nach Anspruch 5, wobei eine Routing-Strategie zum Übermitteln von Datenverkehr von einer Eingangs-Line-Card zu einer Ausgangs-Line-Card über eine Fabric-Switching-Einheit (120) das Implementieren einer Equal-Cost-MultiPath-(ECMP-)Strategie umfasst.

7. Verteiltes Routing-System (100) nach Anspruch 1, wobei jede Line Card (130) und jede Fabric-Switching-Einheit (120) ihre eigene chassisinterne Loopback-Schnittstellenadresse aufweist und wobei jede Line Card und jede Fabric-Switching-Einheit zum Herstellen eines IGP-Angrenzens mit anderen Line Cards und Fabric-Switching-Einheiten, enthalten im verteilten Routing-System, und zum Mitteilen ihrer chassisinternen Loopback-Schnittstellenadresse an diese ausgebildet ist.

**Revendications**

1. Système de routage distribué (100) destiné à être utilisé dans un réseau de communication, ledit système de routage comprenant :

   au moins un processeur (110, 110') configuré comme moteur de routage et/ou un moteur de gestion,
   au moins un contrôleur de commutation fabric (140, 140') configuré pour contrôler le trafic hors bande arrivant à celui-ci, et
   une pluralité de boîtes blanches, chacune étant un matériel autonome comprenant au moins une carte de ligne (130) ou au moins une unité de commutation fabric (120) pour fournir des capacités de commutation ou de routage dans un plan de transfert dudit système de routage distribué,
   dans lequel ledit au moins un contrôleur de commutation fabric est configuré pour connecter ladite pluralité de boîtes blanches audit au moins un processeur, permettant ainsi audit au moins un processeur de gérer le routage du trafic vers/depuis ladite pluralité de boîtes blanches ;
   dans lequel ledit système de routage distribué comprend le moteur de routage/gestion configuré pour être utilisé comme point focal pour le contrôle et la gestion intrabande du trafic, et opérationnel pour configurer des cartes de ligne associées auxdites boîtes blanches et des tables de routage des unités de commutation fabric desdites boîtes blanches ; et
   dans lequel ledit système de routage est un châssis virtuel qui combine la pluralité de boîtes blanches, obtenant ainsi une fonctionnalité d'un routeur en utilisant une pluralité de boîtes blanches autonomes.

2. Système de routage distribué (100) selon la revendication 1, dans lequel ledit au moins un processeur (110, 110') est configuré pour servir de point focal pour tout le trafic de contrôle et de gestion intra-bande.

3. Système de routage distribué (100) selon la revendication 1, dans lequel ledit au moins un processeur (110, 110') est configuré pour fonctionner comme un contrôleur SDN configuré pour programmer des tables de routage pour une pluralité de cartes de ligne (130) et une pluralité d'unités de commutation fabric (120).

4. Système de routage distribué (100) selon la revendication 1, dans lequel une politique de file d'attente implémentée dans ledit système de routage distribué est un élément sélectionné dans un groupe qui consiste en :
   a) une mise en file d'attente de sortie virtuelle de bout en bout (VOQ - Virtual Output Queueing) ; et b) une mise en file d'attente combinée d'entrée et de sortie (CIOQ - Combined Input Output Queueing).

5. Système de routage distribué (100) selon la revendication 1, dans lequel chaque carte de ligne (130) peut être connectée à l'une quelconque des autres cartes de ligne via chacune des unités de commutation fabric (120) en implémentant un mécanisme de répartition de charge.

6. Système de routage distribué (100) selon la revendication 5, dans lequel une politique de routage pour acheminer le trafic d'une carte de ligne d'entrée à une carte de ligne de sortie via une unité de commutation fabric (120) comprend l'implémentation d'une politique multi-chemins à coût égal, ECMP - Equal Cost MultiPath.

7. Système de routage distribué (100) selon la revendication 1, dans lequel chaque carte de ligne (130) et chaque unité de commutation fabric (120) possède sa propre adresse d'interface de bouclage intra-châssis, et dans lequel chaque carte de ligne et chaque unité de commutation fabric sont configurées pour établir des contiguïtés de protocole de passerelle intérieure, IGP - Interior Gateway Protocol, avec d'autres cartes de ligne et unités de commutation fabric comprises dans ledit système de routage distribué et pour y annoncer son adresse d'interface de bouclage intra-châssis.

100

110

RE/ME 1

110'

RE/ME 2

140

CONTROL AND
MANAGEMENT ToR 1

140'

CONTROL AND
MANAGEMENT ToR 2

120

120ₙ₊₁

FABRIC 1    FABRIC 2  - - -  FABRIC N    FABRIC N+1

130₁        130₂            130ₖ₋₁        130ₖ

LINE CARD 1    LINE CARD 2  - - - - -  LINE CARD K-1    LINE CARD K

FIG.1

FABRIC INGRESS/EGRESS PORTS

FABRIC VOQs

LINE CARD

EGRESS VOQs

USER INGRESS/EGRESS PORTS

**FIG.2**

FABRIC N

STAGE 1 – EGRESS LINE CARD LOOKUP

LINE CARD 1

LINE CARD K

STAGE 2 – EGRESS PORT LOOKUP

**FIG.3**

```
┌─────────────────────┐                              ┌─────────────────────┐
│  VIRTUAL  CHASSIS    │                              │   3ʳᵈ PARTY          │
│   CORE  ROUTER       │                              │  CORE  ROUTER        │
└─────────────────────┘                              └─────────────────────┘


          ┌─────────────────────┐      ┌─────────────────────┐
          │  VIRTUAL  CHASSIS    │      │  VIRTUAL  CHASSIS    │
          │   CORE  ROUTER       │      │  CORE  ROUTER        │
          └─────────────────────┘      └─────────────────────┘


              ┌──────────┐                    ┌──────────┐
              │    PE    │    . . . . . . .   │    PE    │
              │  ROUTER  │                    │  ROUTER  │
              └──────────┘                    └──────────┘
```

FIG.4

```
     ┌─────────────────────┐                          ┌─────────────────────┐
     │  VIRTUAL  CHASSIS    │                          │   3ʳᵈ PARTY          │
     │   CORE  ROUTER       │                          │  CORE  ROUTER        │
     │      (RR)            │                          └─────────────────────┘
     └─────────────────────┘


   IGP&LDP
                  ┌─────────────────────┐      ┌─────────────────────┐
                  │  VIRTUAL  CHASSIS    │      │  VIRTUAL  CHASSIS    │
   BGP            │   CORE  ROUTER       │      │  CORE  ROUTER        │
        IGP&LDP   └─────────────────────┘      └─────────────────────┘


              ┌──────────┐                    ┌──────────┐
              │    PE    │    . . . . . . .   │    PE    │
              │  ROUTER  │                    │  ROUTER  │
              └──────────┘                    └──────────┘
```

FIG.5

FIG.6

RIB—FIB SYNC

PRIMARY ROUTING ENGINE (x86) [RIB]

FABRIC SWITCH #1 [FIB]

FABRIC LAYER

...

FABRIC SWITCH #N+1 [FIB]

SECONDARY ROUTING ENGINE (x86) [RIB]

...

LINE CARD SWITCH #1 [FIB]

LINE CARD SWITCH #2 [FIB]

LINE CARD SWITCH #3 [FIB]

...

LINE CARD SWITCH #K [FIB]

...

LINE CARDS LAYER

IGP/LDP/BGP

NETWORK INTERFACES

FIG.7

PRIMARY ROUTING ENGINE (x86) [RIB]

FABRIC SWITCH #1 [FIB]

...

FABRIC LAYER

FABRIC SWITCH #N+1 [FIB]

SECONDARY ROUTING ENGINE (x86) [RIB]

LINE CARD SWITCH #1 [FIB]

LINE CARD SWITCH #2 [FIB]

LINE CARD SWITCH #3 [FIB]

...

LINE CARD SWITCH #K [FIB]

...

LINE CARDS LAYER

NETWORK INTERFACES

FIG.8

VIRTUAL CHASSIS

NETWORK INTERFACES

FIG.9

FIG.10

FIG.11

VIRTUAL CHASSIS

FIG.12

**EP 3 698 520 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2034410 A2